# FASCICULE DE BREVET EUROPEEN

(11) **EP 3 732 417 B1**
(45) Date de publication et mention de la délivrance du brevet: **01.03.2023**
(21) Numéro de dépôt: 19703771.6
(22) Date de dépôt: 09.01.2019
(51) Int. Cl.: F28D 1/04, F28F 27/00, B60K 11/04, B60L 1/02, B60L 58/26, H01M 10/44, H01M 10/613, H01M 10/625, H01M 10/63, H01M 10/6563, H01M 10/663

(54) **SYSTEME DE TRAITEMENT THERMIQUE POUR VEHICULE ELECTRIQUE OU HYBRIDE**
THERMISCHE BEHANDLUNGSANLAGE FÜR EIN ELEKTRISCHES ODER HYBRID-FAHRZEUG
THERMAL TREATMENT SYSTEM FOR ELECTRIC OR HYBRID VEHICLE

(30) Priorité: 09.01.2018 FR 1850174
(43) Date de publication de la demande: 04.11.2020
(73) Titulaire: Valeo Systemes Thermiques-THS, 78322 Le Mesnil Saint Denis Cedex (FR)
(72) Inventeur: LANARD, Jean-Louis, 78322 Le Mesnil Saint Denis Cedex (FR)
(74) Mandataire: Valeo Systèmes Thermiques
(86) Numéro de dépôt international: PCT/FR2019/050039
(87) Numéro de publication internationale: WO 2019/138184

(56) Documents cités:
- EP-A1- 2 830 146
- EP-A1- 3 096 392
- US-A1- 2002 043 413
- US-A1- 2002 073 726
- US-A1- 2011 139 397
- US-A1- 2015 291 008

## Description

Le domaine de la présente invention est celui des systèmes de traitement thermique pour véhicule, notamment pour véhicule automobile, et plus particulièrement, la présente invention se rapporte aux systèmes de traitement thermique permettant une régulation thermique d'un dispositif de stockage électrique destiné aux véhicules automobiles électriques ou hybrides.

Le réchauffement climatique ainsi que le tarissement des sources d'énergies fossiles poussent aujourd'hui les constructeurs automobiles à investir dans le développement de véhicules moins polluants et moins consommateurs de carburants traditionnels. Ainsi, ces dernières années ont vu émerger de nouveaux véhicules fonctionnant, au moins partiellement, grâce à l'énergie électrique.

Ces véhicules, qu'ils soient totalement électriques ou bien hybrides, c'est-à-dire combinant l'utilisation d'un moteur thermique et d'un moteur électrique, nécessitent donc un approvisionnement en énergie électrique conséquent et sont équipés de dispositifs de stockage électrique, comportant par exemple un ou plusieurs modules de batteries. Des modules de batteries, c'est-à-dire une pluralité de cellules électriques connectées entre elles, sont ainsi agencés sous les châssis de ces véhicules. Ces modules de batteries supportent mal de fonctionner en dehors d'une plage de températures déterminées. Notamment, afin d'optimiser le fonctionnement et la durée de vie de ces dernières, il convient de les maintenir à une température inférieure à 40°C.

Il est par exemple connu d'utiliser le circuit de fluide réfrigérant, par ailleurs utilisé pour chauffer ou refroidir différentes zones ou différents composants du véhicule et pour traiter thermiquement un flux d'air envoyé dans l'habitacle du véhicule équipé d'un tel circuit, pour refroidir le dispositif de stockage électrique. Le circuit de fluide réfrigérant fournit ainsi l'énergie capable de refroidir le dispositif de stockage électrique pendant son utilisation en phases de roulage. Le circuit de fluide réfrigérant est ainsi dimensionné pour refroidir ce dispositif de stockage électrique pour des températures qui restent modérées.

A titre d'exemple, le circuit de fluide réfrigérant peut être suffisant pour refroidir les batteries lors d'une phase de charge classique du dispositif de stockage électrique du véhicule, à savoir une phase de charge réalisée en raccordant le véhicule pendant plusieurs heures au réseau électrique domestique. Cette technique de charge permet de maintenir la température du dispositif de stockage électrique en dessous d'un certain seuil, ce qui permet de se passer de tout système de refroidissement du dispositif de stockage électrique.

Une nouvelle technique de charge a fait son apparition récemment. Elle consiste à charger le dispositif de stockage électrique sous une tension et un ampérage élevés, de manière à charger le dispositif de stockage électrique en un temps maximum de vingt minutes. Cette charge rapide implique un échauffement du dispositif de stockage électrique qu'il convient de traiter. Par ailleurs, il faut considérer la possibilité que les occupants du véhicule restent à l'intérieur du véhicule tout ou partie du temps de charge mentionné ci-dessus. Il faut alors également traiter thermiquement l'habitacle pendant cette charge rapide pour maintenir des conditions de confort acceptables par les occupants, notamment quand la température extérieure au véhicule dépasse 35°C. Ces deux demandes en refroidissement impliquent un dimensionnement du système qui le rend peu compatible avec les contraintes des véhicules automobiles actuels.

Le document EP2830146A1 divulgue, par exemple, un module de commande configuré pour contrôler à la fois un dispositif de traitement thermique de l'habitacle et un dispositif de traitement thermique du dispositif de stockage électrique.

Le problème technique réside donc dans la capacité d'une part à dissiper les calories générées par le dispositif de stockage électrique pendant la charge rapide, et d'autre part à refroidir l'habitacle, tant en limitant la consommation et/ou l'encombrement d'un système capable de remplir simultanément ces deux fonctions.

La présente invention s'inscrit dans ce contexte et propose un système de traitement thermique pour véhicule électrique ou hybride, selon la revendication 1, dans lequel au moins un dispositif de traitement thermique d'un habitacle dudit véhicule comporte un premier échangeur de chaleur agencés sur un circuit de fluide réfrigérant. Selon l'invention, un deuxième échangeur de chaleur est agencé sur ledit circuit de fluide réfrigérant avec un deuxième groupe moto-ventilateur associé au deuxième échangeur de chaleur, ledit système de traitement thermique comprenant un module de commande configuré d'une part pour détecter une phase de rechargement rapide d'un dispositif de stockage électrique du véhicule et pour détecter une phase de traitement thermique de l'habitacle et d'autre part pour activer le deuxième groupe moto-ventilateur lorsqu'une phase de rechargement rapide et une phase de traitement thermique sont détectées simultanément.

On comprend donc que la présente invention permet avantageusement d'augmenter temporairement les capacités thermiques du système de traitement thermique, par une augmentation de la surface d'échange de chaleur. Il est notable que selon l'invention, cette augmentation de la surface d'échange de chaleur est une augmentation temporaire, ciblée dans le temps. En effet, augmenter les capacités thermiques de ce système de traitement thermique implique une hausse de la consommation électrique du véhicule, d'une part par la mise en fonctionnement d'au moins un groupe moto-ventilateur supplémentaire et d'autre part par l'augmentation nécessaire du régime de fonctionnement de composants associés au circuit de fluide réfrigérant, tel qu'un compresseur par exemple. En d'autres termes, le système de traitement thermique selon la présente invention est capable d'augmenter ses capacités thermiques afin de répondre à un besoin ponctuel, lorsqu'une opération de rechargement rapide du dispositif de stockage électrique est détectée, cette augmentation étant temporaire de manière à ne pas augmenter la consommation du véhicule lorsque celui-ci fonctionne dans un mode standard, dans lequel le système de traitement thermique n'est mis en oeuvre que pour le traitement thermique de l'habitacle du véhicule.

Selon la présente invention, le premier échangeur de chaleur et le deuxième échangeur de chaleur sont empilés le long d'une direction longitudinale, le premier échangeur de chaleur étant agencé longitudinalement en aval du deuxième échangeur de chaleur par rapport à un sens selon lequel se propage un flux d'air destiné à traverser au moins le deuxième échangeur de chaleur, et le deuxième échangeur de chaleur présentant une dimension transversale supérieure à une dimension transversale du premier échangeur de chaleur.

La direction longitudinale peut être confondue avec un axe le long duquel se déplace le véhicule sur lequel est destiné à être monté le système de traitement thermique selon la présente invention. Par « dimension transversale », on entend une dimension mesurée le long d'un axe transversal perpendiculaire à la direction longitudinale et parallèle à la route sur laquelle se déplace le véhicule. En d'autres termes, on comprend que le deuxième échangeur de chaleur s'étend latéralement au-delà du premier échangeur de chaleur. Selon ce premier exemple de réalisation, le deuxième échangeur de chaleur peut notamment s'étendre sur toute la dimension transversale du premier échangeur de chaleur et s'étendre au-delà de l'une et/ou l'autre des extrémités transversales de ce premier échangeur de chaleur : il en résulte qu'au moins une partie du flux d'air qui traverse le premier échangeur de chaleur a déjà traversé le deuxième échangeur de chaleur. Afin d'optimiser l'échange de chaleur entre le système de traitement thermique et le flux d'air qui le traverse, en assurant notamment qu'un maximum d'air frais traverse le premier échangeur de chaleur, le deuxième échangeur de chaleur peut présenter une dimension verticale, c'est-à-dire mesurée le long d'un axe perpendiculaire à la direction longitudinale et à l'axe transversal, inférieure à une dimension verticale correspondante du premier échangeur de chaleur.

Selon une caractéristique de la présente invention, deux groupes moto-ventilateurs peuvent être associés au premier échangeur de chaleur. Selon le premier exemple de réalisation, deux groupes moto-ventilateurs peuvent également être associés au deuxième échangeur de chaleur.

Selon une autre caractéristique de la présente invention, le premier échangeur de chaleur et/ou le deuxième échangeur de chaleur et/ou le troisième échangeur de chaleur peuvent être des condenseurs. Alternativement, le premier échangeur de chaleur et/ou le deuxième échangeur de chaleur et/ou le troisième échangeur de chaleur peuvent être des radiateurs.

Selon un agencement du système de traitement thermique selon la présente invention, au moins le deuxième échangeur de chaleur est agencé en amont des passages de roues avant, par rapport à un sens de propagation d'un flux d'air traversant le premier échangeur de chaleur.

Selon un autre agencement du système de traitement thermique selon l'invention, au moins le deuxième échangeur de chaleur est agencé dans l'un des passages de roues arrière du véhicule.

Le système de traitement thermique, selon l'un quelconque des exemples de réalisation précédemment décrit, peut être équipé d'au moins un compresseur et un dispositif d'expansion, configurés pour traiter le fluide réfrigérant circulant dans le circuit et amené à traverser chacun des échangeurs de chaleur.

L'invention concerne encore un véhicule électrique ou hybride comprenant au moins un système de traitement thermique tel que précédemment décrit.

L'invention concerne enfin un procédé de commande d'un système de traitement thermique selon l'une des revendications précédentes, comprenant une étape de détection d'une phase de rechargement rapide d'un dispositif de stockage électrique d'un véhicule équipé dudit système de traitement thermique, une étape de détection d'une utilisation d'un dispositif de traitement thermique de l'habitacle de ce véhicule et une étape au cours de laquelle un groupe moto-ventilateur associé à un échangeur de chaleur additionnel est activé lorsqu'une phase de rechargement rapide et une phase de traitement thermique sont détectées simultanément.

D'autres détails, caractéristiques et avantages ressortiront plus clairement à la lecture de la description détaillée donnée ci-après à titre indicatif en relation avec les différents exemples de réalisation illustrés sur les figures suivantes :
- la figure 1 est une vue d'ensemble schématique d'une face avant d'un véhicule automobile comprenant un système de traitement thermique selon la présente invention ;
- la figure 2 est une représentation schématique du système de traitement thermique, respectivement, selon un premier exemple;
- la figure 3 est une représentation schématique du système de traitement thermique, qui ne fait pas partie de la présente invention
- la figure 4 est une vue schématique, sous forme de synoptique, du fonctionnement d'un module de commande du système de traitement thermique selon la présente invention
- la figure 5 est une représentation schématique d'un système de traitement thermique selon l'invention illustrant un circuit de fluide réfrigérant associé à une boucle de refroidissement d'un dispositif de stockage électrique du véhicule.

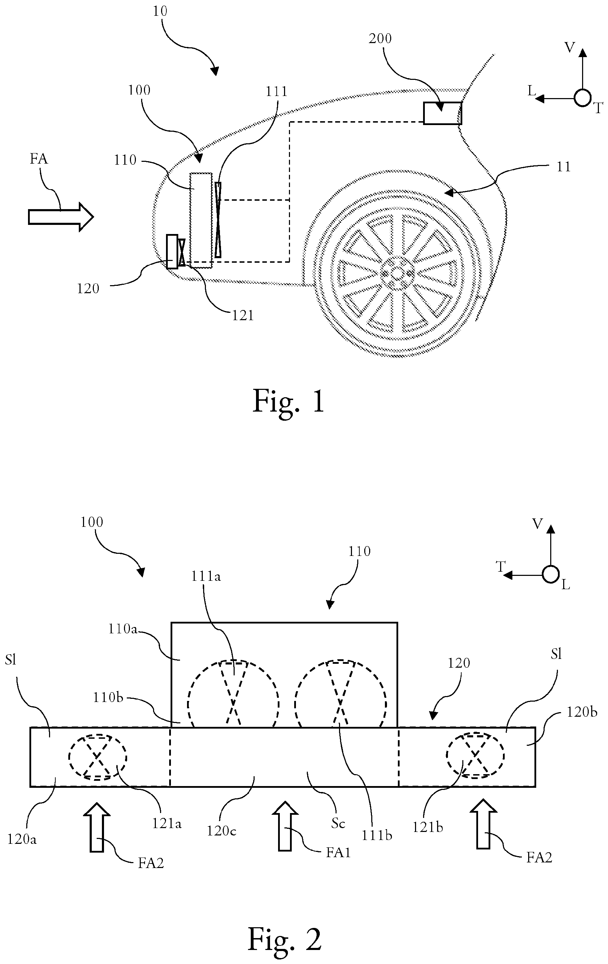

Dans la description qui va suivre, les dénominations « longitudinale », « verticale », et « transversale » se réfèrent à une orientation d'un système de traitement thermique 100 lorsqu'il est intégré à un véhicule automobile 10, tel que par exemple illustré sur la figure 1. Ainsi, la dénomination « longitudinale » correspond à une direction le long de laquelle se déplace le véhicule, la dénomination « verticale » doit s'entendre comme une direction perpendiculaire à la route sur laquelle circule le véhicule et le long de laquelle se succèdent le châssis, l'habitacle et le toit du véhicule et la dénomination « transversale » fait référence à une direction perpendiculaire à la fois à la direction longitudinale et à la direction verticale. Afin de faciliter la lecture des figures, un trièdre L, V, T est représenté sur chacune d'entre elles, la lettre « L » faisant référence à la direction longitudinale, la lettre « V » à la direction verticale et la lettre « T » à la direction transversale.

La figure 1 est une représentation schématique d'une face avant du véhicule automobile 10 électrique ou hybride dans lequel est monté le système de traitement thermique 100 selon la présente invention. De façon très schématique, ce système de traitement thermique 100 comprend au moins un premier échangeur de chaleur 110 et au moins un deuxième échangeur de chaleur 120, auxquels sont respectivement associés au moins un premier groupe moto-ventilateur 111 et un deuxième groupe moto-ventilateur 121.

Chacun de ces échangeurs de chaleur 110, 120 comprend au moins une zone principale dans laquelle circule un fluide caloporteur, cette zone principale étant bordée par deux boîtes collectrices configurées pour générer l'entrée et la sortie du fluide caloporteur dans l'échangeur de chaleur et pour assurer une circulation homogène du fluide caloporteur dans la zone principale. Ce fluide caloporteur, par exemple un fluide réfrigérant, est configuré pour échanger des calories avec un flux d'air FA qui traverse la zone principale. Ainsi, cette zone principale est également dénommée « zone d'échange de chaleur ». Tel qu'illustré sur la figure 1, ce flux d'air FA se propage principalement selon la direction longitudinale L et pénètre dans le véhicule 10 par sa face avant.

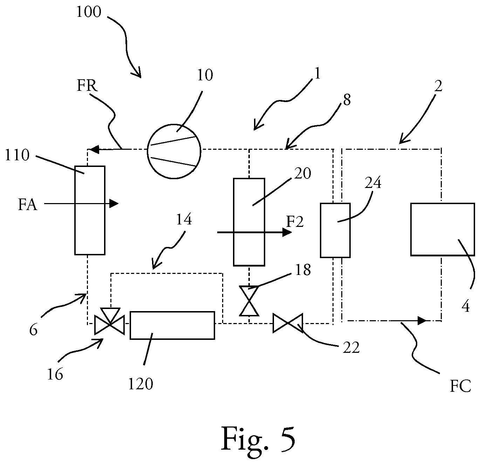

Selon l'invention, le premier échangeur de chaleur 110 et le deuxième échangeur de chaleur 120 sont agencés sur un même circuit de fluide réfrigérant, c'est-à-dire que le fluide caloporteur qui parcourt le premier échangeur de chaleur 110 est le même que celui qui parcourt le deuxième échangeur de chaleur 120. La figure 5 illustre un exemple d'agencement de ces premier et deuxième échangeurs de chaleur 110, 120, dans un circuit 1 de fluide réfrigérant associé à une boucle de refroidissement d'un dispositif de stockage électrique 4 du véhicule 10. De façon avantageuse, le deuxième échangeur de chaleur 120, de même que d'éventuels échangeurs de chaleur additionnels, est piloté en fonction des besoins thermiques du véhicule et notamment dans le cas où une phase de rechargement rapide d'un dispositif de stockage électrique est détectée.

Selon l'exemple illustré sur la figure 1, le premier échangeur de chaleur 110 et le deuxième échangeur de chaleur 120 sont agencés en amont d'un passage de roues avant 11, par rapport au sens de propagation du flux d'air FA destiné à traverser les zones d'échange de chaleur des premier et/ou deuxième échangeurs de chaleur 110, 120. Alternativement, le deuxième échangeur de chaleur 120 peut être agencé dans un passage de roue arrière du véhicule 10.

Optionnellement, le système de traitement thermique 100 selon l'invention peut être agencé dans un boîtier - non illustré ici - limitant ainsi les déperditions d'air et optimisant donc les capacités thermiques du système de traitement thermique 100. Par « capacités thermiques du système de traitement thermique » on entend ici la capacité du système de traitement thermique à échanger des calories avec le flux d'air FA traversant les échangeurs de chaleur 110, 120 dudit système de traitement thermique 100.

Le système de traitement thermique 100 comporte ici un circuit 1 de fluide réfrigérant FR et un ensemble 2 de traitement thermique d'un dispositif de stockage électrique 4 du véhicule automobile par exemple illustrés sur la figure 5. Le dispositif de stockage électrique 4 est, par exemple, formé d'une pluralité de cellules électriques conditionnées ensemble en un pack de batteries. Ce dispositif de stockage électrique 4 est destiné à fournir de l'énergie à un moteur électrique, non représenté sur les figures, le moteur électrique étant destiné à mettre, totalement ou partiellement, le véhicule en mouvement.

Tel que représenté, le circuit de fluide réfrigérant 1 comprend, agencées en parallèle l'une de l'autre, une première branche 6 et une deuxième branche 8 configurées pour acheminer en leur sein le fluide réfrigérant FR.

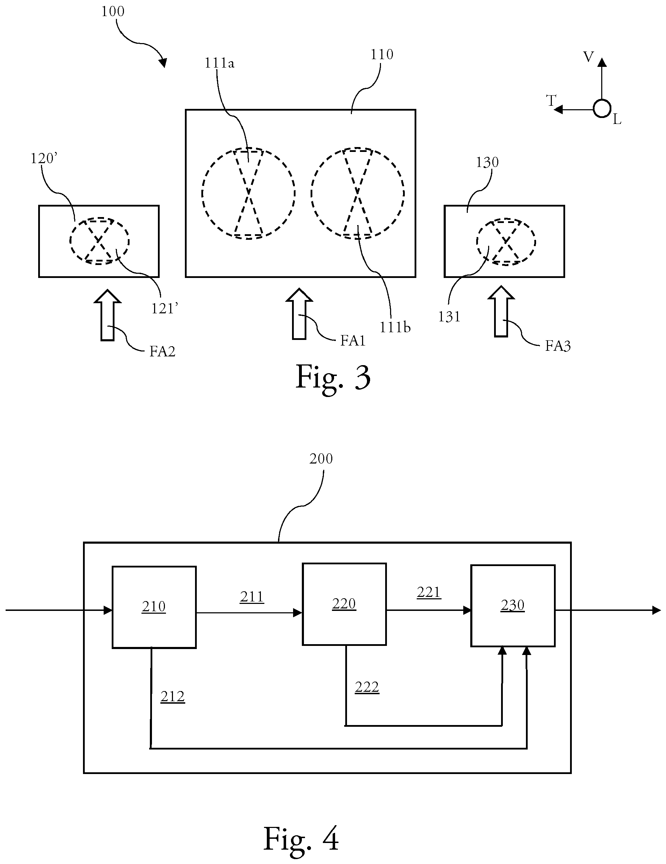

Tel qu'illustré sur la figure 5, la première branche 6 du circuit de fluide réfrigérant 1 comprend notamment un dispositif 10 de compression du fluide réfrigérant FR, le premier échangeur de chaleur 110, le deuxième échangeur de chaleur 120, un dispositif de dérivation 14, dont une vanne de distribution 16, associé à ce deuxième échangeur de chaleur 120, un premier dispositif d'expansion 18 et un quatrième échangeur de chaleur 20. Tel que cela sera plus amplement décrit ci-après, notamment en référence à la figure 3, le circuit 1 de fluide réfrigérant peut également comprendre un troisième échangeur de chaleur 130, non illustré sur la figure 5, qui est alors agencé au sein de la première branche 6 de ce circuit 1 et dont le fonctionnement est identique au fonctionnement du deuxième échangeur de chaleur 120 représenté ici. On comprend donc que ce troisième échangeur de chaleur 130 sera également associé à un dispositif de dérivation, ce dernier pouvant être le même dispositif de dérivation 14 que celui associé au deuxième échangeur de chaleur 120, ou un dispositif de dérivation distinct et propre au troisième échangeur de chaleur 130.

Préférentiellement, au sein du circuit de fluide réfrigérant 1, le premier dispositif d'expansion 18 est agencé entre le deuxième échangeur de chaleur 120 et le quatrième échangeur de chaleur 20.

Le dispositif de compression 10 est conçu pour comprimer le fluide réfrigérant FR entre une basse pression d'entrée et une haute pression de sortie. Les premier et deuxième échangeurs de chaleur 110, 120 sont avantageusement des échangeurs de chaleur du type fluide/air, et ils sont configurés pour réaliser un échange de chaleur entre un premier flux d'air FA et le fluide réfrigérant FR, un tel échange de chaleur participant à refroidir le fluide réfrigérant FR à pression constante. Le premier dispositif d'expansion 18 est destiné à réaliser une détente du fluide réfrigérant FR de la haute pression précitée vers une basse pression.

Le dispositif de dérivation 14 comporte une vanne de distribution 16 pilotée par un module de commande 200 qui sera décrit plus en détails ci-après, et qui peut en sortie du premier échangeur de chaleur 110, soit permettre la circulation du fluide réfrigérant à travers le deuxième échangeur de chaleur 120, soit dérouter ce fluide réfrigérant directement vers le premier dispositif d'expansion sans passer par le deuxième échangeur de chaleur 120.

Dans cette première branche 6, le quatrième échangeur de chaleur 20, du type fluide/air, réalise un échange de chaleur entre un deuxième flux d'air F2 et le fluide réfrigérant FR, en vue de refroidir le deuxième flux d'air F2. Le deuxième flux d'air F2 est, par exemple, un flux d'air destiné à être admis à l'intérieur de l'habitacle du véhicule automobile et/ou un flux d'air recyclé en provenance de l'habitacle du véhicule automobile. Plus particulièrement, le quatrième échangeur de chaleur 20 se comporte par exemple comme un évaporateur destiné à refroidir le deuxième flux d'air F2, préalablement à son admission à l'intérieur de l'habitacle du véhicule automobile.

La deuxième branche 8 du circuit de fluide réfrigérant 1 selon l'invention comporte un deuxième dispositif d'expansion 22 et un cinquième échangeur de chaleur 24. Avantageusement, le cinquième échangeur de chaleur 24 est du type fluide/fluide, également connu sous la désignation anglo-saxonne de "chiller". Comme le montre la figure 5, la deuxième branche 8 est agencée en parallèle de la première branche 6 du circuit 1 de fluide réfrigérant.

Le deuxième dispositif d'expansion 22 a pour rôle de réaliser une détente du fluide réfrigérant FR, notamment pour refroidir ce dernier pour son passage dans la deuxième branche 8 et son entrée dans le cinquième échangeur de chaleur 24. Selon l'invention, et comme le montre la figure 5, le cinquième échangeur de chaleur 24 est commun à la deuxième branche 8 du circuit de fluide réfrigérant 1 et à l'ensemble 2 de traitement thermique du dispositif de stockage électrique 4.

Selon un exemple de réalisation, non exclusif, l'ensemble 2 dédié au traitement thermique du dispositif de stockage électrique 4 comporte un circuit configuré pour acheminer un fluide caloporteur FC entre le dispositif de stockage électrique 4 et le cinquième échangeur de chaleur 24 précédemment défini. Selon d'autres exemples de réalisation, non limitatifs, le cinquième échangeur de chaleur 24 peut être placé en contact direct avec le dispositif de stockage électrique 4, le refroidissement de ce dernier s'effectuant alors par conduction et/ou par convexion.

Nous allons maintenant décrire plus en détails deux exemples de réalisation du système de traitement thermique 100 selon l'invention, un premier exemple de réalisation étant illustré sur la figure 2 et un deuxième exemple de réalisation étant illustré sur la figure 3.

Selon l'example de réalisation illustré sur la figure 2, on comprend que le premier échangeur de chaleur 110 et le deuxième échangeur de chaleur 120 sont empilés le long de la direction longitudinale L. En d'autres termes, les deux échangeurs de chaleur sont traversés successivement par un même flux d'air. Tel que représenté, le deuxième échangeur de chaleur 120 présente ici une dimension transversale, c'est-à-dire une dimension mesurée le long de la direction transversale T, qui est supérieure à une dimension transversale du premier échangeur de chaleur 110. En d'autres termes, le deuxième échangeur de chaleur 120 est plus large que le premier échangeur de chaleur 110 et s'étend, transversalement, au-delà de ce premier échangeur de chaleur 110. Il en résulte qu'une première partie FA1 du flux d'air traversant le deuxième échangeur de chaleur 120 traverse également le premier échangeur de chaleur 110, ou qu'en d'autres termes, une partie du flux d'air amené à traverser le premier échangeur de chaleur 110 est déjà passée à travers le deuxième échangeur de chaleur et se retrouve donc réchauffée avant le passage dans le premier échangeur de chaleur.

Ainsi, le deuxième échangeur de chaleur 120 comprend une portion centrale 120c située en amont du premier échangeur de chaleur 110 par rapport au sens de propagation du flux d'air FA. Tel qu'illustré, cette portion centrale 120c est agencée entre deux portions latérales 120a, 120b, qui s'étendent transversalement de part et d'autre du premier échangeur de chaleur 110.

Il est notable dans l'exemple illustré que le premier échangeur de chaleur 110 présente une dimension verticale, c'est-à-dire mesurée le long de la direction verticale V, qui est supérieure à une dimension verticale du deuxième échangeur de chaleur 120. Ainsi, ce premier échangeur de chaleur 110 peut être artificiellement découpé en une portion supérieure 110a et une portion inférieure 110b, empilées le long de la direction verticale V, la portion supérieure 110a étant la portion de ce premier échangeur de chaleur 110 située la plus près d'un capot du véhicule 10 sur lequel est monté le système de traitement thermique 100. Tel que représenté, la portion inférieure 110b est la portion de ce premier échangeur de chaleur 110 agencée en aval du deuxième échangeur de chaleur 120, et plus précisément en aval de la portion centrale 120c de ce deuxième échangeur de chaleur 120.

Dans le sens de ce qui a été décrit précédemment, une partie du flux d'air traverse uniquement le premier échangeur de chaleur 110, et plus particulièrement, la portion supérieure 110a de ce premier échangeur de chaleur 110, de sorte que cette portion supérieure est correctement alimentée en air frais, tandis qu'une partie du flux d'air traverse successivement la portion centrale du deuxième échangeur de chaleur puis le premier échangeur de chaleur.

Ainsi, tel que représenté sur la figure 2, le flux d'air FA traversant le système de traitement thermique 100 est séparé en plusieurs parties, chacune destinée à traverser le premier et/ou le deuxième échangeur de chaleur 110, 120. On comprend de cette figure 2 qu'une première partie FA1 du flux d'air FA traverse la portion centrale 120c du deuxième échangeur de chaleur 120 avant de traverser la portion inférieure 110b du premier échangeur de chaleur 110, qu'une deuxième partie FA2 de ce flux d'air FA traverse uniquement les portions latérales 120a, 120b du deuxième échangeur de chaleur 120 et qu'une troisième partie, non illustrée ici, traverse uniquement la portion supérieure 110a du premier échangeur de chaleur 110. Il est entendu que les flèches illustrant ces parties de flux d'air n'indiquent pas le sens de propagation de ces dernières qui se déplacent principalement le long de la direction longitudinale, tel que mentionné ci-dessus.

Selon l'exemple illustré ici, deux premiers groupes moto-ventilateurs 111a, 111b sont associés au premier échangeur de chaleur 110 et deux deuxièmes groupes moto-ventilateurs 121a, 121b sont associés au deuxième échangeur de chaleur 120. On comprend de ce qui précède que les deux premiers groupes moto-ventilateurs 111a, 111b sont configurés pour générer la première partie FA1 du flux d'air et la troisième partie de ce flux d'air tandis que les deuxièmes groupes moto-ventilateurs 121a, 121b sont configurés pour générer les deuxièmes parties FA2 de ce flux d'air.

La figure 2 illustre un dimensionnement particulier du système de traitement thermique dans lequel les deux échangeurs de chaleur sont dimensionnés de sorte que les portions latérales 120a, 120b du deuxième échangeur 120, c'est-à-dire les portions qui s'étendent transversalement au-delà de la portion centrale 120c du deuxième échangeur de chaleur correspondant à la dimension transversale du premier échangeur de chaleur, offrent chacune une surface d'échange de chaleur Sl dont la somme est au moins égale à la surface Sc de cette portion centrale 120c du deuxième échangeur de chaleur. De la sorte, on augmente la dimension de la surface d'échange de chaleur par l'ajout du deuxième échangeur de chaleur et on s'assure que la surface d'échange de chaleur alimentée en air frais est au moins la même que s'il n'y avait qu'un seul échangeur de chaleur dans le système de traitement thermique.

On décrira ci-après plus en détails le procédé de commande de chacun des groupes moto-ventilateurs en fonction des caractéristiques du véhicule, et notamment la façon dont sont activés selon l'invention les deuxièmes groupes moto-ventilateurs lorsqu'au moins une phase de rechargement rapide du module de stockage électrique est mise en oeuvre.

La figure 3 illustre un exemple de réalisation du système de traitement thermique 100 qui ne fait pas partie de la présente invention. Selon cet exemple de réalisation, le système de traitement thermique 100 comprend, le premier échangeur de chaleur 110, un deuxième échangeur de chaleur 120' et un troisième échangeur de chaleur 130, tous trois agencés sur un même circuit de fluide réfrigérant. Selon ce deuxième exemple de réalisation, le deuxième échangeur de chaleur 120' et le troisième échangeur de chaleur 130 sont agencés de part et d'autre du premier échangeur de chaleur 110, le long de la direction transversale T. Tel qu'illustré, le système de traitement thermique 100 selon ce deuxième exemple de réalisation comprend deux premiers groupes moto-ventilateurs 111a, 111b associés au premier échangeur de chaleur 110, un deuxième groupe moto-ventilateur 121' associé au deuxième échangeur de chaleur 120' et un troisième groupe moto-ventilateur 131 associé au troisième échangeur de chaleur 130.

Tel qu'illustré sur la figure 3, le flux d'air traversant le système de traitement thermique 100 est ici divisé en trois parties FA1, FA2, FA3 distinctes, chacune destinée à traverser l'un des échangeurs de chaleurs 110, 120', 130. Ainsi, la première partie FA1 de ce flux d'air est destiné à traverser le premier échangeur de chaleur 110, la deuxième partie FA2 de ce flux d'air est destinée à traverser le deuxième échangeur de chaleur 120' et la troisième partie FA3 de ce flux d'air est quant à elle destinée à traverser le troisième échangeur de chaleur 130. Tel que précédemment, les flèches représentant ces parties de flux d'air ne sont données qu'à titre indicatif et ne représentent pas le sens de propagation de ces dernières.

Dans cet exemple de réalisation, il convient de noter que chacun des trois échangeurs de chaleur est agencé de manière à être dégagé transversalement des deux autres. Plus particulièrement, les deuxième et troisième échangeurs de chaleur sont agencés transversalement de part et d'autre du premier échangeur de chaleur, sans qu'il y ait ici de zone de recouvrement, c'est-à-dire de portion dans laquelle deux échangeurs de chaleur se superposent au moins en partie longitudinalement. De la sorte, chacun des échangeurs de chaleur peut être alimenté en air frais dès lors que le groupe moto-ventilateur associé est mis en marche pour forcer l'air à traverser l'échangeur de chaleur associé. On comprend que l'on peut augmenter ainsi la surface d'échange de chaleur sans avoir besoin de surdimensionner le premier échangeur de chaleur.

Selon l'un ou l'autre de ces exemples de réalisation, on comprend que plus le nombre de groupes moto-ventilateur en fonctionnement augmente, plus la quantité de flux d'air, et notamment la quantité d'air frais, amenée à passer à travers des échangeurs de chaleur du système de traitement thermique 100 est important et plus l'échange thermique est performant. Cette augmentation du nombre de groupes moto-ventilateurs est réalisée à la demande, afin que la consommation électrique correspondant à la mise en oeuvre des groupes moto-ventilateur soit ajustée au besoin et non surdimensionnée. On comprend que le premier échangeur de chaleur est dimensionné pour produire une puissance thermique d'environ 10kW, suffisante pour gérer les besoins en refroidissement de l'habitacle et les besoins en refroidissement du dispositif de stockage thermique lors du roulage du véhicule. Dès lors, il est intéressant selon l'invention de ne mettre en oeuvre les groupes moto-ventilateurs correspondants aux échangeurs de chaleur additionnels que lorsque le besoin de refroidissement est supérieur, et notamment lorsqu'une opération de rechargement rapide est réalisée, le cas échéant simultanément au fonctionnement du traitement thermique de l'habitacle. La mise en oeuvre des groupes moto-ventilateurs associés aux échangeurs additionnels peut ainsi permettre le fonctionnement simultané de l'ensemble des échangeurs additionnels sur le même circuit de fluide réfrigérant et la production d'une puissance thermique de l'ordre de 15 à 20KW.

Etant donné que le premier échangeur de chaleur, le deuxième échangeur de chaleur, et le troisième échangeur de chaleur le cas échéant, sont agencés sur le même circuit de fluide réfrigérant, on comprend que cette augmentation de la surface d'échange de chaleur implique une augmentation du débit de fluide réfrigérant amené à circuler à travers les échangeurs de chaleur sur cette surface d'échange, pour réaliser l'échange de calories/frigories avec le flux d'air amené à traverser cette surface d'échange de chaleur. Et l'augmentation du débit de fluide réfrigérant est notamment réalisée par une augmentation des régimes de fonctionnement des autres composants du circuit de fluide réfrigérant en question, et particulièrement du compresseur associé à ce circuit. Ainsi, entre la consommation des groupes moto-ventilateurs et des autres composants du circuit de fluide réfrigérant, l'augmentation des capacités thermiques du système de traitement thermique selon l'invention entraine une augmentation de la consommation électrique du véhicule.

Aussi, afin de limiter cet excès de consommation électrique au strict minimum, le système de traitement thermique 100 selon l'invention comprend un module de commande 200, illustré de façon schématique sur la figure 1, apte à piloter au moins le deuxième groupe moto-ventilateur 121, 121' associé au deuxième échangeur de chaleur 120 et/ou le troisième groupe moto-ventilateur 131 associé au troisième échangeur de chaleur 130. Ce module de commande 200 est ainsi configuré pour mettre en fonctionnement ou arrêter les deuxièmes et/ou troisième groupes moto-ventilateur 121, 121', 131 du système de traitement thermique 100. Bien entendu, ce module de commande pourrait être configuré pour piloter également le groupe moto-ventilateur associé au premier échangeur de chaleur, tel qu'illustré à titre d'exemple sur la figure 1.

Le fonctionnement de ce module de commande 200 est décrit ci-après en référence à la figure 4, qui illustre ce fonctionnement sous forme synoptique. Dans la description qui va suivre, le module de commande 200 est configuré pour ne piloter que le deuxième groupe moto-ventilateur 121, 121' mais on comprend que, selon le deuxième exemple de réalisation, ce module de commande 200 peut également être configuré pour piloter le troisième groupe moto-ventilateur 131 associé au troisième échangeur de chaleur 130. Selon ce deuxième exemple de réalisation, la mise en marche du deuxième groupe moto-ventilateur 121' peut être couplée à la mise en marche du troisième groupe moto-ventilateur 131, ou bien être réalisée indépendamment de la mise en marche du troisième groupe moto-ventilateur, le but étant d'optimiser l'étendue des surfaces d'échanges de chaleur en fonction de l'état de fonctionnement du véhicule.

Tel qu'illustré sur cette figure 4, le module de commande 200 comprend un premier sous-module 210 de détection d'une phase de rechargement rapide du dispositif de stockage électrique véhicule. Ce premier sous-module 210 est ainsi configuré pour détecter si le véhicule 10, et plus exactement si un dispositif de stockage électrique de ce véhicule 10, est en phase de rechargement rapide ou non. La détection de cette phase de rechargement rapide peut être réalisée par l'analyse d'informations sur l'arrêt du véhicule et/ou la montée en température du dispositif de stockage électrique au-delà d'un seuil limite, ou bien par la détection de l'enfoncement d'un bouton approprié par l'utilisateur, ou bien encore par l'analyse d'informations sur la fluctuation du niveau de charge du dispositif de stockage électrique.

Dans l'hypothèse où le véhicule est en phase de rechargement rapide, le premier sous-module 210 envoie une première information 211 correspondante à un deuxième sous-module 220 quant à lui configuré pour détecter si un dispositif de traitement thermique d'un habitacle du véhicule est en fonctionnement. Si ce deuxième sous-module 220 détecte que le dispositif de traitement thermique de l'habitacle du véhicule est en cours d'utilisation, et par exemple que la climatisation est mise en oeuvre par les utilisateurs restés dans le véhicule lors de la phase de rechargement rapide, il envoie une deuxième information 221 correspondante à un troisième sous-module 230 du module de commande 200. Ce troisième sous-module 230 est quant à lui configuré pour générer une instruction permettant la mise en marche du/des deuxième(s) groupe moto-ventilateur 121, 121' associé(s) au deuxième échangeur de chaleur 120.

Ainsi, on comprend que lorsque le véhicule 10 est en phase de rechargement rapide et que, de façon concomitante, le dispositif de traitement thermique de l'habitacle du véhicule est en cours d'utilisation, le module de commande 200 est configuré pour permettre d'augmenter les capacités thermiques du système de traitement thermique 100 en activant le(s) deuxième(s) et troisième groupe(s) moto-ventilateur 121, 121', 131 de ce dernier. Ainsi, le refroidissement du dispositif de stockage électrique et celui de l'habitacle du véhicule sont assurés malgré la forte demande en énergie qu'ils nécessitent. On comprend que dans une situation identique dans un véhicule comprenant le système de traitement thermique selon le deuxième exemple de réalisation, le deuxième groupe moto-ventilateur 121' et le troisième groupe moto-ventilateur 131 sont mis en marche, simultanément ou indépendamment l'un de l'autre. La mise en oeuvre d'un ou de deux groupes moto-ventilateur peut notamment être sélectionnée en fonction du dépassement de certaines valeurs seuils lors de l'étape de détection de la phase de rechargement rapide et de la phase de traitement thermique de l'habitacle, pour adapter les besoins en puissance thermique à la situation du véhicule.

Dans l'hypothèse où le premier sous-module 210 ne détecte pas de phase de rechargement rapide du dispositif de stockage électrique du véhicule 10, il envoie une troisième information 212 au troisième sous-module 230 qui est alors informé que le seul fonctionnement du premier groupe moto-ventilateur 111 associé au premier échangeur de chaleur 110 est suffisant pour répondre aux besoins thermiques du véhicule. De même, si, après avoir reçu la première information 211 envoyée par le premier sous-module 210, le deuxième sous-module 220 ne détecte pas l'utilisation du système de refroidissement d'un habitacle du véhicule, il envoie une quatrième information 222 au troisième sous-module 230 qui peut consister en une information selon laquelle le seul fonctionnement du premier groupe moto-ventilateur 111 associé au premier échangeur de chaleur 110 est suffisant pour répondre aux besoins thermiques du véhicule.

Si le deuxième groupe moto-ventilateur 121, 121' est en fonctionnement lorsque le troisième sous-module 230 reçoit la troisième ou la quatrième information 212, 222 selon lesquelles le véhicule n'est pas en phase de recharge rapide et/ou le système de refroidissement de l'habitacle du véhicule n'est pas en cours d'utilisation, alors ce troisième sous-module 230 envoie une instruction d'arrêt de ce deuxième groupe moto-ventilateur 121, 121'. De la même façon, selon le deuxième exemple de réalisation le deuxième groupe moto-ventilateur et le troisième groupe moto-ventilateur seront arrêtés simultanément lorsque le véhicule n'est pas en phase de rechargement rapide ou lorsque le système de refroidissement de l'habitacle du véhicule n'est pas en cours d'utilisation.

Dans chacun des cas de mise en oeuvre décrits précédemment, il convient de comprendre que les sous-modules sont configurés pour envoyer une instruction de mise en oeuvre des groupes moto-ventilateurs, afin d'assurer ou non un passage d'air frais à travers les échangeurs de chaleur associés, et que le module de commande 200 est également configuré pour piloter en conséquence des vannes de distribution pour orienter le fluide réfrigérant à l'intérieur du circuit vers les échangeurs de chaleur additionnels, c'est-à-dire le deuxième échangeur de chaleur et le cas échéant le troisième échangeur de chaleur, lorsque les groupes moto-ventilateurs sont actionnés pour que de l'air passe à travers ces échangeurs de chaleur additionnels. Lorsque les sous-modules envoient une instruction de couper ou de conserver éteints les deuxième et/ou troisième groupes moto-ventilateurs, les vannes de distribution précédemment évoquées sont pilotées pour que le fluide réfrigérant ne circule pas à travers ces échangeurs de chaleur additionnels correspondants. Le compresseur n'est alors pas suralimenté et le fluide réfrigérant circule normalement dans le circuit et le premier échangeur de chaleur.

On comprend donc que, grâce notamment à ce module de commande 200, le système de traitement thermique 100 selon la présente invention est avantageusement capable d'augmenter ses capacités thermiques lorsqu'un besoin ponctuel est détecté. Ainsi, le système de traitement thermique 100 est apte à endiguer un échauffement temporaire du dispositif de stockage électrique, sans pour autant surdimensionner les échangeurs de chaleur fonctionnant en continu sur le circuit de fluide réfrigérant, et donc sans pour autant augmenter la consommation du véhicule lorsque celui-ci circule normalement.

La présente invention ne saurait toutefois se limiter aux moyens et configurations décrits et illustrés ici et elle s'étend également à tout moyen ou configuration et à toute combinaison de moyens techniquement opérante de tels moyens. En particulier la forme et la disposition des échangeurs de chaleur et des groupes moto-ventilateur qui leur sont associés peuvent être modifiées sans nuire à l'invention dans la mesure où elles remplissent les mêmes fonctionnalités que celles décrites dans le présent document.

## Revendications

1. Système de traitement thermique (100) pour véhicule (10) électrique ou hybride, dans lequel au moins un dispositif de traitement thermique d'un habitacle dudit véhicule (10) comporte un premier échangeur de chaleur (110) agencés sur un circuit (1) de fluide réfrigérant, un deuxième échangeur de chaleur (120, 120') est agencé sur ledit circuit (1) de fluide réfrigérant avec un deuxième groupe moto-ventilateur (121, 121') associé au deuxième échangeur de chaleur (120, 120'), ledit système de traitement thermique (100) comprenant un module de commande (200) configuré d'une part pour détecter une phase de rechargement rapide d'un dispositif de stockage électrique (4) du véhicule (10) et pour détecter une phase de traitement thermique de l'habitacle et d'autre part pour activer le deuxième groupe moto-ventilateur (121, 121') lorsqu'une phase de rechargement rapide et une phase de traitement thermique sont détectées simultanément, **caractérisé en ce que** le premier échangeur de chaleur (110) et le deuxième échangeur de chaleur (120) sont empilés le long d'une direction longitudinale (L), le premier échangeur de chaleur (110) étant agencé longitudinalement en aval du deuxième échangeur de chaleur (120) par rapport à un sens selon lequel se propage un flux d'air (FA, FA1, FA2) destiné à traverser au moins le deuxième échangeur de chaleur (120), et le deuxième échangeur de chaleur (120) présentant une dimension transversale supérieure à une dimension transversale du premier échangeur de chaleur (110).

2. Système de traitement thermique (100) selon la revendication précédente, dans lequel deux groupes moto-ventilateurs (111a, 111b) sont associés au premier échangeur de chaleur (110).

3. Système de traitement thermique (100) selon l'une quelconque des revendications précédentes, dans lequel au moins le deuxième échangeur de chaleur (120, 120') est agencé en amont des passages de roues avant (11), par rapport à un sens de propagation d'un flux d'air (FA, FA1) traversant le premier échangeur de chaleur (110).

4. Système de traitement thermique (100) selon l'une quelconque des revendications précédentes, dans lequel, au moins le deuxième échangeur de chaleur (120, 120') est agencé dans l'un des passages de roues arrière du véhicule (10).

5. Système de traitement thermique (100) selon l'une quelconque des revendications précédentes, dans lequel le circuit (1) de fluide réfrigérant est équipé en outre d'un compresseur (10) et d'au moins un dispositif d'expansion (18).

6. Véhicule (10) électrique ou hybride comprenant au moins un système de traitement thermique (100) selon l'une quelconque des revendications précédentes.

7. Procédé de commande d'un système de traitement thermique (100) selon l'une des revendications précédentes, comprenant une étape de détection d'une phase de rechargement rapide d'un dispositif de stockage électrique (4) d'un véhicule (10) équipé dudit système de traitement thermique (100), une étape de détection d'une utilisation d'un dispositif de traitement thermique de l'habitacle de ce véhicule et une étape au cours de laquelle un groupe moto-ventilateur (121, 121', 131) associé à un échangeur de chaleur additionnel (120, 120', 130) est activé lorsqu'une phase de rechargement rapide et une phase de traitement thermique sont détectées simultanément.

## Patentansprüche

1. System zur thermischen Behandlung (100) für ein Elektro- oder Hybridfahrzeug (10), bei dem mindestens eine Vorrichtung zur thermischen Behandlung einer Fahrgastzelle des Fahrzeugs (10) einen ersten Wärmetauscher (110) beinhaltet, der in einem Kältemittelkreislauf (1) angeordnet ist, wobei ein zweiter Wärmetauscher (120, 120') in dem Kältemittelkreislauf (1) mit einer zweiten Gebläseeinheit (121, 121') angeordnet ist, die dem zweitem Wärmetauscher (120, 120') zugeordnet ist, wobei das System zur thermischen Behandlung (100) ein Steuerungsmodul (200) umfasst, das zum einen dazu ausgestaltet ist, eine Schnellaufladephase einer elektrischen Speichervorrichtung (4) des Fahrzeugs (10) zu detektieren und eine Phase der thermischen Behandlung der Fahrgastzelle zu detektieren, und zum anderen dazu, die zweite Gebläseeinheit (121, 121') zu aktivieren, wenn eine Schnellaufladephase und eine Phase der thermischen Behandlung gleichzeitig detektiert werden, **dadurch gekennzeichnet, dass** der erste Wärmetauscher (110) und der zweite Wärmetauscher (120) entlang einer Längsrichtung (L) gestapelt sind, wobei der erste Wärmetauscher (110) längs stromab des zweiten Wärmetauschers (120) angeordnet ist in Bezug auf einen Richtungssinn, gemäß dem sich ein Luftstrom (FA, FA1, FA2) ausbreitet, der dazu bestimmt ist, mindestens den zweiten Wärmetauscher (120) zu durchqueren, und wobei der zweite Wärmetauscher (120) ein Quermaß aufweist, das größer als ein Quermaß des ersten Wärmetauschers (110) ist.

2. System zur thermischen Behandlung (100) nach dem vorhergehenden Anspruch, bei dem zwei Gebläseeinheiten (111a, 111b) dem ersten Wärmetauscher (110) zugeordnet sind.

3. System zur thermischen Behandlung (100) nach einem der vorhergehenden Ansprüche, bei dem mindestens der zweite Wärmetauscher (120, 120') stromauf der Vorderradkästen (11) angeordnet ist in Bezug auf einen Ausbreitungsrichtungssinn eines Luftstroms (FA, FA1), der den ersten Wärmetauscher (110) durchquert.

4. System zur thermischen Behandlung (100) nach einem der vorhergehenden Ansprüche, bei dem mindestens der zweite Wärmetauscher (120, 120') in einem der Hinterradkästen des Fahrzeugs (10) angeordnet ist.

5. System zur thermischen Behandlung (100) nach einem der vorhergehenden Ansprüche, bei dem der Kältemittelkreislauf (1) ferner mit einem Kompressor (10) und mit mindestens einer Ausdehnungsvorrichtung (18) ausgestattet ist.

6. Elektro- oder Hybridfahrzeug (10), das mindestens ein System zur thermischen Behandlung (100) nach einem der vorhergehenden Ansprüche umfasst.

7. Verfahren zur Steuerung eines Systems zur thermischen Behandlung (100) nach einem der vorhergehenden Ansprüche, umfassend einen Schritt des Detektierens einer Schnellaufladephase einer elektrischen Speichervorrichtung (4) eines Fahrzeugs (10), das mit dem System zur thermischen Behandlung (100) ausgestattet ist, einen Schritt des Detektierens einer Verwendung einer Vorrichtung zur thermischen Behandlung der Fahrgastzelle dieses Fahrzeugs und einen Schritt, in dessen Verlauf eine Gebläseeinheit (121, 121', 131), die einem zusätzlichen Wärmetauscher (120, 120', 130) zugeordnet ist, aktiviert wird, wenn eine Schnellaufladephase und eine Phase zur thermischen Behandlung gleichzeitig detektiert werden.

## Claims

1. Heat treatment system (100) for an electric or hybrid vehicle (10), wherein at least one device for the heat treatment of an interior of said vehicle (10) has a first heat exchanger (110) arranged on a refrigerant fluid circuit (1), a second heat exchanger (120, 120') is arranged on said refrigerant fluid circuit (1) with a second motor-fan unit (121, 121') associated with the second heat exchanger (120, 120'), said heat treatment system (100) comprising a control module (200) configured on the one hand to detect a phase of rapid recharging of an electrical storage device (4) of the vehicle (10) and to detect a phase of heat treatment of the interior and on the other hand to activate the second motor-fan unit (121, 121') when a rapid recharging phase and a heat treatment phase are detected simultaneously, **characterized in that** the first heat exchanger (110) and the second heat exchanger (120) are stacked along a longitudinal direction (L), the first heat exchanger 110) being arranged longitudinally downstream of the second heat exchanger (120) with respect to a direction in which an air flow (FA, FA1, FA2) that is intended to pass through at least the second heat exchanger (120) propagates, and the second heat exchanger (120) having a transverse dimension greater than a transverse dimension of the first heat exchanger (110).

2. Heat treatment system (100) according to the preceding claim, wherein two motor-fan units (111a, 111b) are associated with the first heat exchanger (110).

3. Heat treatment system (100) according to either one of the preceding claims, wherein at least the second heat exchanger (120, 120') is arranged upstream of the front wheel arches (11), with respect to a direction of propagation of an air flow (FA, FA1) passing through the first heat exchanger (110).

4. Heat treatment system (100) according to any one of the preceding claims, wherein at least the second heat exchanger (120, 120') is arranged in one of the rear wheel arches of the vehicle (10).

5. Heat treatment system (100) according to any one of the preceding claims, wherein the refrigerant fluid circuit (1) is also equipped with a compressor (10) and at least one expansion device (18).

6. Electric or hybrid vehicle (10) comprising at least one heat treatment system (100) according to any one of the preceding claims.

7. Method for controlling a heat treatment system (100) according to one of the preceding claims, comprising a step of detecting a phase of rapid recharging of an electrical storage device (4) of a vehicle (10) equipped with said heat treatment system (100), a step of detecting use of a device for the heat treatment of the interior of this vehicle and a step during which a motor-fan unit (121, 121', 131) associated with an additional heat exchanger (120, 120', 130) is activated when a rapid recharging phase and a heat treatment phase are detected simultaneously.
